# FASCICULE DE BREVET EUROPEEN

(11) **EP 1 169 225 B1**
(45) Date de publication et mention de la délivrance du brevet: **21.05.2003**
(21) Numéro de dépôt: 00917134.9
(22) Date de dépôt: 06.04.2000
(51) Int. Cl.: B64C 3/14, B64C 3/58

(54) **SURFACE AERODYNAMIQUE D'AERONEF A DEFLECTEUR DE BORD DE FUITE**
AERODYNAMISCHE FLÄCHE EINES FLUGZEUGS MIT EINER LEITKLAPPE AN DER HINTEREN FLÜGELKANTE
AERODYNAMIC SURFACE OF AN AIRCRAFT WITH A LEAK BAFFLE

(30) Priorité: 16.04.1999 FR 9904777
(43) Date de publication de la demande: 09.01.2002
(73) Titulaire: ONERA (Office National d'Etudes et de Recherches Aérospatiales), 92320 Châtillon (FR)
(72) Inventeur: CORREGE, Michel, F-31500 Toulouse (FR); MIGNOSI, André, F-31500 Toulouse (FR); CARUANA, Daniel, F-31470 Fonsorbes (FR); GOBERT, Jean-louis, F-31400 Toulouse (FR)
(74) Mandataire: Bonnetat, Christian
(86) Numéro de dépôt international: FR0000864
(87) Numéro de publication internationale: WO00063071

(56) Documents cités:
- EP-A- 0 260 586
- EP-A- 0 615 903
- FR-A- 2 531 676
- US-A- 4 867 396
- US-A- 5 294 080

## Description

La présente invention concerne une surface aérodynamique d'aéronef, telle qu'une aile d'avion, une dérive, un empennage, un carénage, un pylône de nacelle de moteur, etc... pourvue d'au moins un déflecteur de bord de fuite.

Par le document US-4 867 396, on connaît déjà une surface aérodynamique, plus particulièrement une aile d'avion, dont la portance et la traînée sont respectivement augmentée et réduite, grâce à un déflecteur, appelé micro-volet, disposé au bord de fuite de ladite surface aérodynamique, incliné par rapport à l'intrados de celle-ci. Ce déflecteur est fixe et il en est de même de son inclinaison par rapport audit intrados, l'angle d'inclinaison entre ledit déflecteur et la corde de la surface aérodynamique pouvant être choisi parmi plusieurs valeurs, par exemple 20°. De plus, la corde dudit déflecteur est petite par rapport à celle de la surface aérodynamique, le rapport desdites cordes étant compris entre 0,5% et 1,5%.

Par ailleurs, on sait que les voilures d'avions peuvent être soumises à un phénomène de tremblement, généralement désigné par le terme anglo-saxon de "buffeting". Ce phénomène résulte de décollements instationnaires de l'écoulement d'air prenant naissance sur l'extrados de la voilure et produisant, par un effet de couplage, des vibrations de la structure. Ce tremblement peut apparaître à tous les régimes de vol d'un avion et est accentué en régime transsonique par les oscillations de l'onde de choc provoquées par les décollements instationnaires.

Pour combattre le tremblement, on a déjà pensé à utiliser les volets mobiles usuels de bord de fuite, prévus pour le pilotage des avions, comme cela est par exemple décrit dans les brevets FR-2 531 676 et US-4 705 902. En effet, de tels volets de bord de fuite présentent un extrados et un intrados, qui prolongent respectivement l'extrados et l'intrados des surfaces aérodynamiques à l'arrière desquelles ils sont articulés. Ainsi, lorsqu'ils sont braqués, ils modifient à la fois, localement, la courbure de l'extrados et de l'intrados de ladite surface aérodynamique.

Toutefois, on a remarqué que, lorsque le tremblement était combattu à l'aide de volets de bord de fuite, il existait le risque que les écoulements décollés de l'extrados de la surface aérodynamique recollent à l'extrados du volet braqué, rendant l'avion difficilement pilotable. De plus, il n'est pas sans inconvénients de combattre le tremblement avec des volets de bord de fuite dont la fonction usuelle et spécifique est de participer au pilotage de l'aéronef.

Aussi, la présente invention a pour objet d'éliminer, ou à tout le moins de réduire le tremblement des surfaces aérodynamiques, intervenant essentiellement dans le domaine de vol transsonique, tout en permettant d'améliorer les caractéristiques aérodynamiques de ces dernières. Pour ce faire, elle concerne un système à déflecteur s'apparentant à celui décrit dans le document US-4 867 396, brièvement analysé ci-dessus, permettant d'améliorer lesdites caractéristiques et de combattre le tremblement par le braquage statique ou dynamique dudit déflecteur.

A cette fin, selon l'invention, la surface aérodynamique d'aéronef comportant :
- un extrados et un intrados reliés l'un à l'autre, à l'avant, par un bord d'attaque et, à l'arrière, par un culot de bord de fuite, dont la section arrière extrême forme le bord de fuite de ladite surface aérodynamique ; et
- au moins un déflecteur destiné à améliorer les performances aérodynamiques de ladite surface aérodynamique, la corde dudit déflecteur étant égale à quelques centièmes de la corde de ladite surface aérodynamique et ledit déflecteur étant disposé à l'arrière de celle-ci, est remarquable en ce que :

- ledit déflecteur est mobile et est logé dans un évidement pratiqué dans l'épaisseur de l'intrados dudit culot de bord de fuite et débouchant dans ledit bord de fuite, de sorte que le bord arrière dudit culot est constitué par une partie d'épaisseur réduite dudit bord de fuite ;
- ledit déflecteur mobile est articulé, par sa partie avant, autour d'un axe au moins sensiblement parallèle audit bord de fuite pour pouvoir pivoter autour dudit axe d'articulation sous l'action de moyens d'actionnement ; et
- ledit déflecteur mobile peut prendre :
   . soit une position extrême rétractée, pour laquelle ledit déflecteur est entièrement logé dans ledit évidement d'intrados en assurant la continuité dudit intrados, le bord arrière dudit déflecteur coopérant alors avec ledit bord arrière dudit culot pour former ledit bord de fuite ;
   . soit l'une quelconque d'une pluralité de positions déployées, pour laquelle ledit déflecteur est braqué avec sa partie arrière en saillie hors dudit évidement d'intrados, en communiquant ainsi au bord de fuite de ladite surface aérodynamique une épaisseur variable paramétrable.

Ainsi, en position rétractée d'un tel déflecteur de petite corde, aucune modification n'est apportée ni à l'extrados, ni à l'intrados de la surface aérodynamique, alors qu'en position braquée, seul ledit intrados est modifié. Dans une telle position de braquage dudit déflecteur, la géométrie de l'extrados de la surface aérodynamique reste inchangée, les performances aérodynamiques de cette dernière étant augmentées par modification de l'épaisseur et de la divergence du bord de fuite, ce qui, par ailleurs, retarde l'apparition du tremblement.

La commande du ou des déflecteurs conformes à la présente invention peut être mécanique, électrique, pneumatique ou hydraulique.

Suivant un premier mode de commande, le ou les déflecteurs peuvent être mis en position fixe avec un braquage angulaire de valeur déterminée, réglable. Il s'agit là d'un braquage statique, semblable à celui du document US 4 867 396, qui crée une différence de pression au bord de fuite entre l'intrados et l'extrados, ce qui augmente la charge arrière de ladite surface aérodynamique par modification de l'épaisseur et de la divergence du bord de fuite. Ainsi :
- à nombre de Mach et incidence fixes, le braquage du déflecteur produit un recul de la position moyenne du choc aérodynamique vers le bord de fuite et une augmentation de la charge arrière, ce qui engendre une augmentation sensible du coefficient de portance ;
- à nombre de Mach et coefficient de portance donnés (vol de croisière), les performances aérodynamiques de la surface aérodynamique sont améliorées, avec diminution de la traînée.

En variante, le ou les déflecteurs peuvent être animés d'un mouvement autour d'une position moyenne de braquage. Il s'agit là d'une commande dynamique, qui peut faire osciller le ou les déflecteurs à une fréquence comprise entre quelques Hz et quelques kHz.

On peut ainsi contrôler le tremblement, avec onde de choc ou non, de façon active, la loi de braquage du déflecteur étant directement déduite à tout instant du niveau de décollement ou de la position du choc.

Le repérage du niveau de décollement et le repérage de la position du choc en régime transsonique sont réalisés de préférence au moyen de mesures instationnaires de pression. Ils pourraient être également obtenus par d'autres moyens, comme les sondes de frottement, les films chauds pariétaux, ... Le traitement de ces données permet de localiser, à tout instant, les niveaux de l'intensité du décollement ou la position du choc.

Dès que les capteurs instationnaires disposés le long de la surface aérodynamique détectent l'apparition des instabilités, le contrôle dynamique actif en boucle fermée agit. Le tremblement est donc traité dès l'apparition des instabilités aérodynamiques, avant qu'il ait pu exciter les modes propres de la structure.

En plus des mesures de pression instationnaires, les vibrations naissantes peuvent être prises en compte par des jauges de contrainte et/ou des accéléromètres et introduites dans la loi de contrôle des déflecteurs, afin d'améliorer les performances d'ensemble.

Le déflecteur de l'invention, pour être actif, ne nécessite pas de présenter une grande corde. Des résultats significatifs ont été obtenus avec des déflecteurs dont la corde est par exemple au plus égale à trois centièmes de la corde de ladite surface aérodynamique.

Par ailleurs, en position extrême rétractée dudit déflecteur, le bord arrière de celui-ci peut être aligné avec le bord arrière dudit culot de bord de fuite. En variante, dans cette position, le bord arrière du déflecteur pourrait faire saillie par rapport au bord arrière dudit culot de bord de fuite.

Ladite surface aérodynamique peut comporter un seul déflecteur s'étendant sur toute son envergure, ou à tout le moins sur la plus grande partie de celle-ci. En variante, elle peut comporter un ou plusieurs déflecteurs d'envergure limitée disposé(s) aux endroits où les phénomènes instationnaires (oscillation de choc ou de décollement) apparaissent et sont les plus intenses. Les différents déflecteurs peuvent être commandés en commun ou indépendamment.

On remarquera que dans la présente invention, par "bord de fuite", on entend, tout comme dans le brevet US 4 867 396, le bord de fuite de l'ensemble de la surface aérodynamique concernée, c'est-à-dire de la surface hors tout. Ainsi, dans le cas où la surface aérodynamique comporte des volets de bord de fuite, le bord de fuite concerné par la présente invention, au niveau de ces volets, est celui desdits volets. Dans le cas d'une aile en vol transsonique, le bord de fuite concerné peut être composé de bords de fuite d'éléments fixes (aile par exemple) et de bords de fuite d'éléments mobiles (volets par exemple). Un déflecteur selon l'invention ne peut pas être situé entre deux éléments en regard selon la corde, comme par exemple au bord de fuite d'un élément principal fixe en regard avec un élément mobile hypersustentateur, un tel bord de fuite ne participant pas à la constitution du bord de fuite hors tout de la surface aérodynamique.

Cette remarque étant faite, on notera que le brevet US-5 294 080 présente une aile comprenant un élément principal fixe et un élément mobile hypersustentateur destiné à augmenter la portance de l'aile dans les phases de vol à basse vitesse. Ce document enseigne que la portance d'une telle aile peut être augmentée en introduisant un déflecteur mobile entre les deux éléments de l'aile. Ce déflecteur mobile fonctionne en tout ou rien. Dans les phases de vol en vitesse transsonique, l'élément hypersustentateur est intégré dans la cambrure de l'élément principal fixe de la voilure, le déflecteur étant alors escamoté dans l'élément principal : il ne remplit aucune fonction. Dans les phases de vol à basse vitesse, ce déflecteur est déployé dans une position perpendiculaire à l'intrados du bord de fuite de l'élément principal fixe: le détecteur modifie la répartition de l'écoulement entre l'intrados et l'extrados de l'élément mobile.

On notera de plus que la fonction du déflecteur de la présente invention n'est pas l'augmentation de l'hypersustentation pendant les phases de vol correspondantes, décollage et atterrissage.

Les figures du dessin annexé feront bien comprendre comment l'invention peut être réalisée. Sur ces figures, des références identiques désignent des éléments semblables.

La figure 1 montre schématiquement, en perspective du dessus, une portion d'aile d'avion conforme à la présente invention.

La figure 2 illustre, à plus grande échelle, le détail II de la figure 1.

Les figures 3 et 4 illustrent, respectivement en position extrême rétractée et en position extrême déployée, le déflecteur de. l'aile de la figure 1.

La figure 5 illustre des moyens de commande statiques du déflecteur conforme à la présente invention.

La figure 6 est un diagramme comparatif illustrant les polaires de l'aile de la figure 1, le déflecteur étant respectivement en position extrême rétractée et en position braquée de 15°.

La figure 7 est une vue schématique illustrant des moyens de commande dynamique active du déflecteur conforme à la présente invention.

La figure 8 illustre l'action du déflecteur de la figure 7 et de ses moyens de commande, en cas de tremblement.

La figure 9 est un diagramme comparatif illustrant l'effet du braquage du déflecteur selon l'invention sur l'apparition du tremblement.

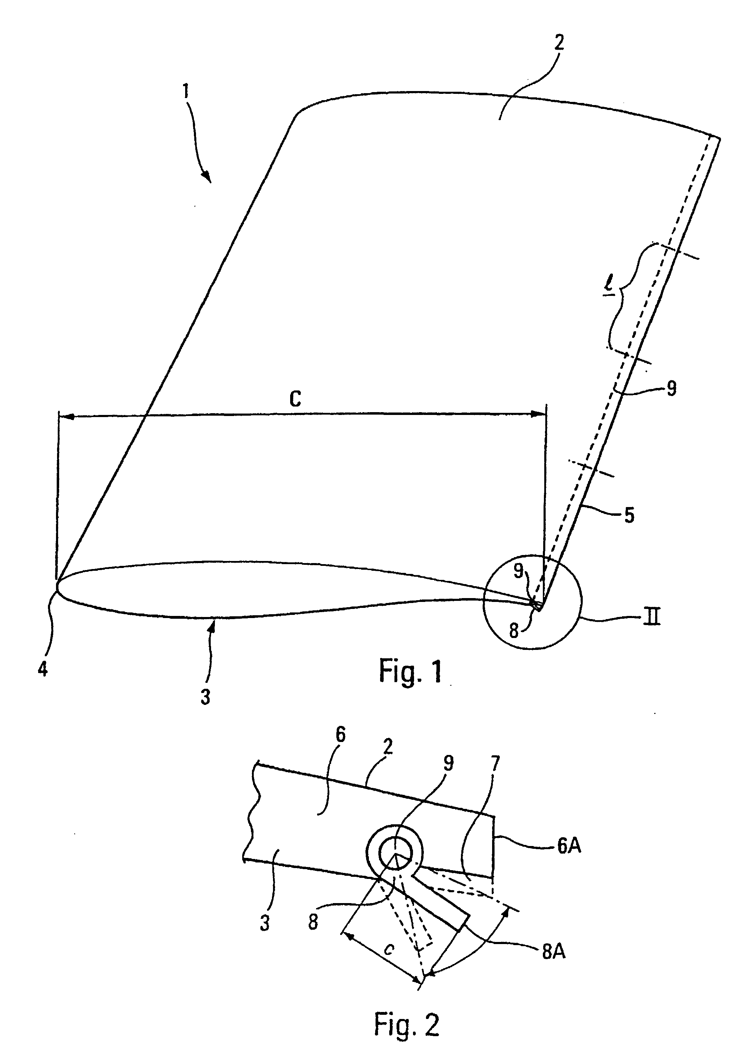

La portion d'aile d'avion 1 montrée par la figure 1 comporte un extrados 2 et un intrados 3 reliés l'un à l'autre, à l'avant, par un bord d'attaque 4 et, à l'arrière, par un bord de fuite 5.

Comme on peut le voir à plus grande échelle sur la figure 2, l'extrados 2 et l'intrados 3 se rapprochent l'un de l'autre vers l'arrière pour former un culot de bord de fuite 6. Ce culot 6 comporte au moins un évidement 7 pratiqué uniquement dans l'épaisseur de l'intrados 3, en avant dudit bord de fuite et s'étendant jusqu'à celui-ci. Ainsi, le bord arrière 6A du culot 6 est constitué par une partie d'épaisseur réduite du bord de fuite 5.

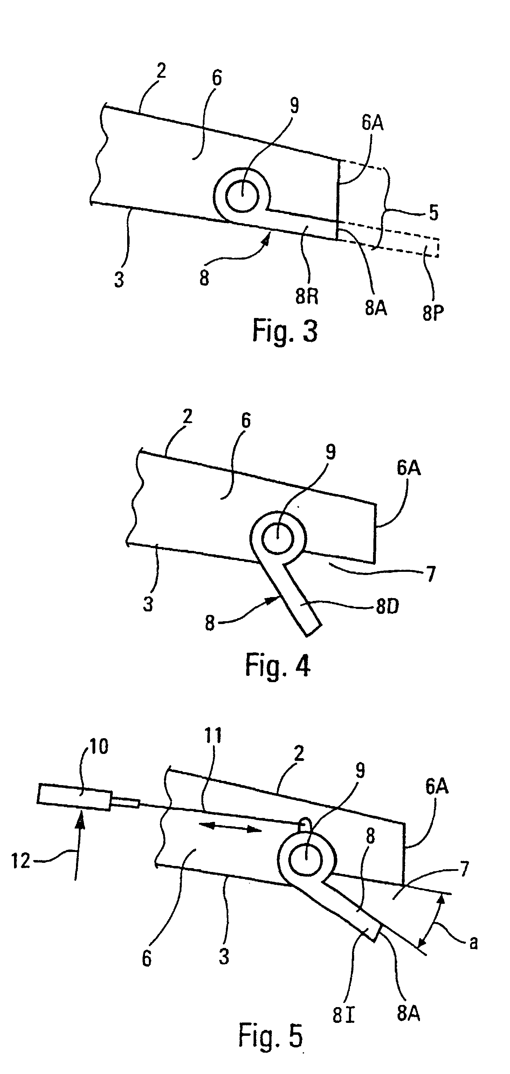

Dans l'évidement d'intrados 7, est disposé au moins un déflecteur mobile 8, articulé par sa partie avant autour d'un axe 9, au moins sensiblement parallèle au bord de fuite 5. Comme cela est illustré sur la figure 1, la corde *c* du déflecteur 8 est petite par rapport à la corde C du profil de l'aile 1. La corde *c* du déflecteur 8 est égale à quelques centièmes, par exemple au plus égale à trois centièmes, de la corde C de l'aile 1. Le déflecteur 8 (voir la figure 2) peut prendre, par rotation autour de l'axe 9 :
- soit une position extrême rétractée 8R (voir également la figure 3), pour laquelle le déflecteur 8 est entièrement logé dans l'évidement d'intrados 7 en assurant la continuité de l'intrados 3 ;
- soit l'une quelconque d'une pluralité de positions déployées 8I (dont l'une est illustrée sur la figure 5), pour laquelle ledit déflecteur 8 est braqué avec sa partie arrière en saillie hors dudit évidement d'intrados 7.

Sur la figure 4, on a représenté le déflecteur 8 en position extrême déployée 8D.

On voit que, en position extrême rétractée 8R (figure 3), le bord arrière 8A du déflecteur 8 coopère avec le bord arrière 6A du culot 6 pour former le bord de fuite 5, le bord arrière 8A du déflecteur 8 étant aligné avec le bord arrière 6A du culot de bord de fuite 6.

Cependant, comme cela est représenté en pointillés sur la figure 3, la corde c du déflecteur 8 pourrait être suffisamment grande (tout en restant petite par rapport à la corde C de l'aile 1) pour que le bord arrière 8A dudit déflecteur fasse saillie, en position rétractée dudit déflecteur, par rapport au bord arrière 6A du culot de bord de fuite 6.

En envergure, le déflecteur 8 peut s'étendre sur la totalité de l'envergure de l'aile 1, c'est-à-dire sur la totalité de la longueur du bord de fuite 5. Cependant, comme cela est illustré en pointillés sur la figure 1, l'aile 1 peut comporter un ou plusieurs déflecteurs 8 de longueur limitée ℓ par rapport à l'envergure de l'aile 1.

Pour actionner chaque déflecteur 8, on peut prévoir un actionneur 10 relié audit déflecteur 8 par une tringlerie 11 et recevant des ordres de commande par une liaison 12.

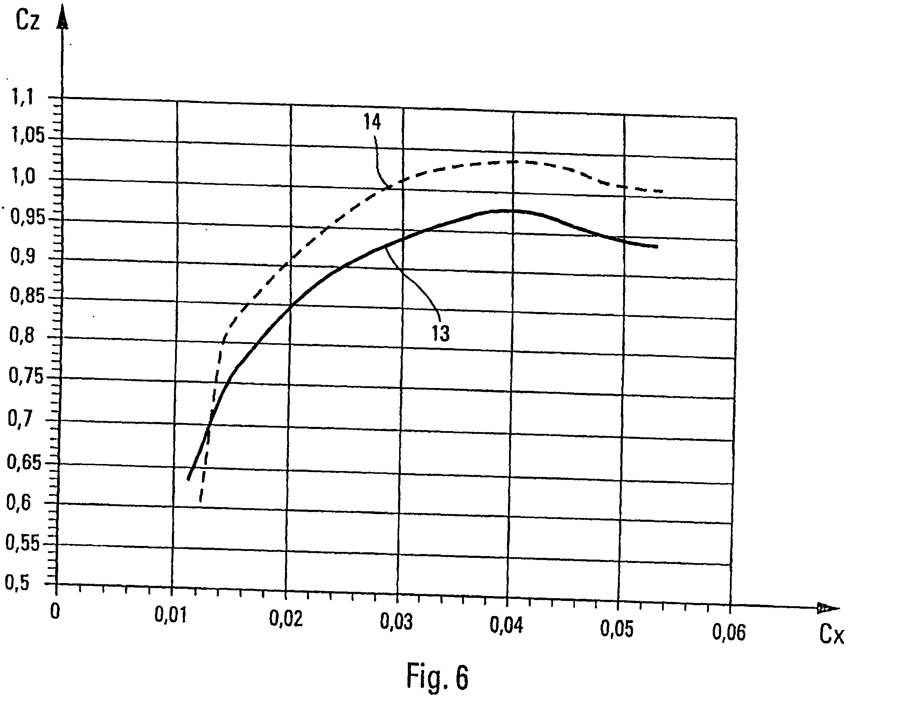

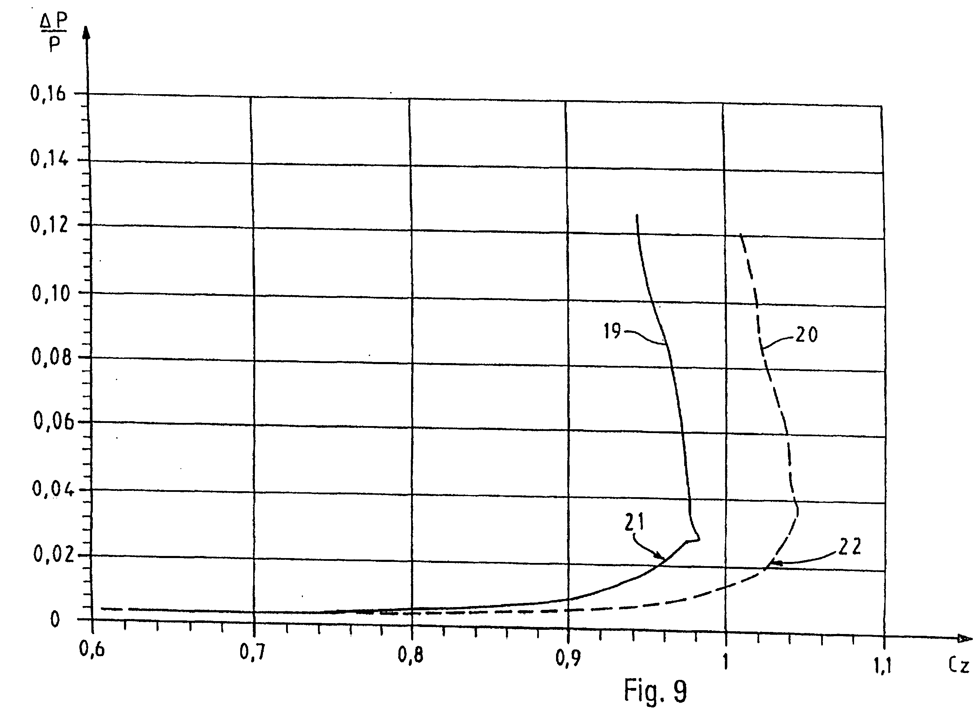

Sur la figure 6, on a représenté la polaire 13 de l'aile 1, lorsque le déflecteur 8 est dans la position extrême rétractée 8R de la figure 3, ainsi que la polaire 14 de ladite aile lorsque le déflecteur 8 est braqué d'un angle *a* (voir la figure 5) égal à 15°. Avec un tel braquage statique, le déflecteur 8 crée une différence de pression au bord de fuite 5 entre l'intrados 3 et l'extrados 2, ce qui entraîne une augmentation de la charge arrière de l'aile 1 par modification de l'épaisseur et de la divergence du bord de fuite 5. Cela entraîne aussi un recul de l'entrée en tremblement, comme l'illustre la figure 9. Sur cette figure, on a représenté les fluctuations de pression ΔP/P en un point de l'extrados de la surface aérodynamique 1 en fonction du coefficient de portance Cz, la courbe 19 correspondant à un angle a égal à 0° et la courbe 20 à un angle a égal à 15°. Sur les courbes 19 et 20, les entrées en tremblement sont désignées respectivement par les flèches 21 et 22. La figure 9 illustre l'augmentation sensible du coefficient de portance du profil considéré pour un braquage de 15°, à nombre de Mach et à incidence fixes.

Les courbes 13 et 14 de la figure 6 illustrent l'augmentation de portance et/ou la diminution de traînée qui sont engendrées par le déflecteur 8.

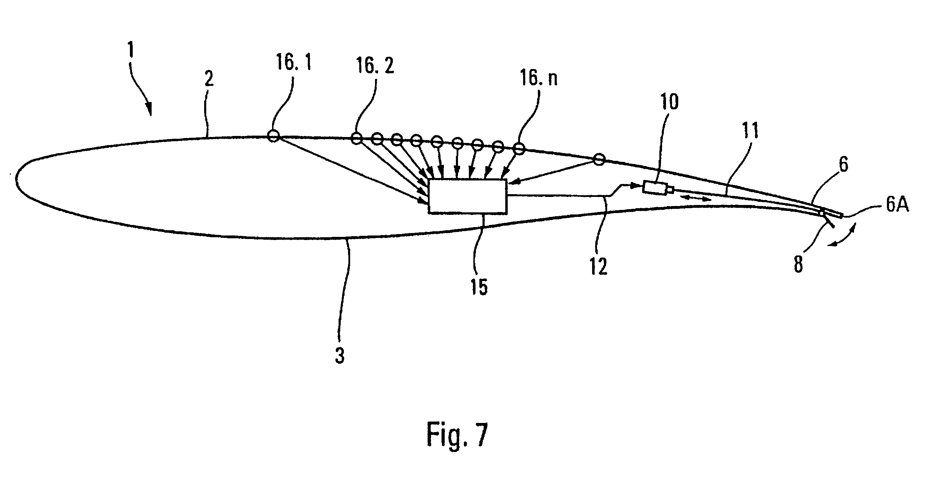

Sur la figure 7, on retrouve l'aile 1, le déflecteur 8, l'actionneur 10, la tringlerie 11, ainsi que la liaison de commande 12. Cependant, dans ce cas, par la liaison 12, l'actionneur 11 reçoit des ordres de commande dynamique provenant d'un dispositif 15, comportant un calculateur et recevant lui-même des informations d'une pluralité de capteurs 16.1, 16.2, ..., 16.n répartis sur l'extrados 2 de l'aile 1. Ces capteurs 16.1 à 16.n, qui sont par exemple des prises de pression, permettent de repérer sur l'extrados 2 le niveau de décollement instationnaire de l'écoulement, ainsi que la position du choc en régime transsonique, de sorte que le calculateur du dispositif 15 peut calculer l'angle de braquage a à appliquer au déflecteur 8.

Le dispositif 15 commande le braquage du déflecteur 8, à tout instant, en fonction du niveau de décollement instationnaire de l'écoulement et de la position du choc, par exemple de façon oscillatoire.

Dès que les capteurs 16.1 à 16.n détectent l'apparition des instabilités d'écoulement, le dispositif de contrôle actif 15 agit sur le déflecteur par l'intermédiaire de l'actionneur 10 et de la tringlerie 11. Le tremblement est donc traité dès l'apparition des instabilités aérodynamiques, avant qu'il air pu exciter les modes propres de l'aile 1.

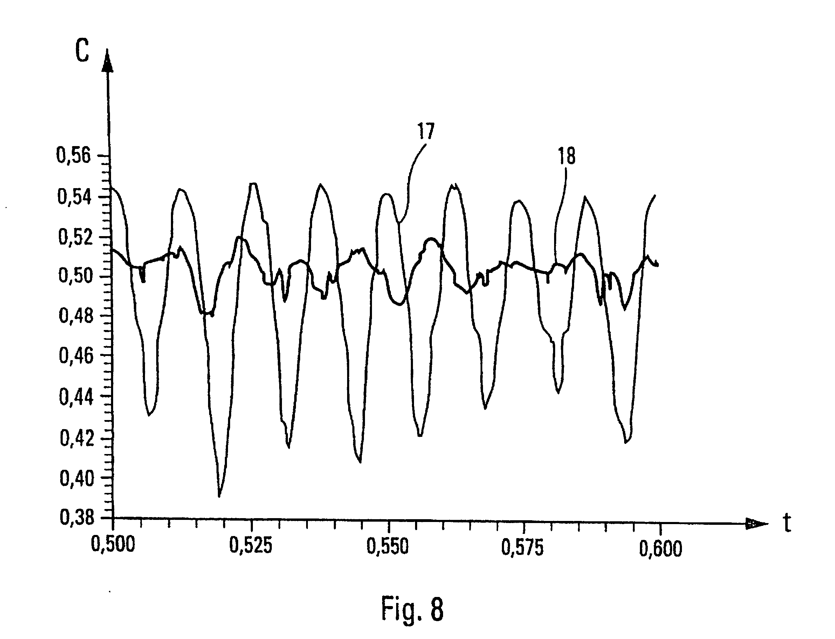

Sur la figure 8, on a illustré, dans un diagramme dont les ordonnées indiquent une position normalisée par rapport à la corde C de l'aile 1 et dont les abscisses représentent le temps *t*, l'influence de l'action du déflecteur 8 commandé dynamiquement par le dispositif 15 et les capteurs 16.1 à 16.n. Sur cette figure 8, la courbe 17 représente l'amplitude des instabilités d'écoulement sur l'aile 1, en l'absence de commande du déflecteur 8, et la courbe 18 représente cette même amplitude avec contrôle des instabilités par le déflecteur 8.

On comprendra aisément de ce qui précède que le ou les déflecteurs 8 pourraient également être utilisés comme aide au pilotage de l'aéronef comportant l'aile 1, ou pour réduire, dans cet aéronef :
- les instabilités aérodynamiques dues aux décollements dans le domaine des basses vitesses, sans onde de choc, et
- les instabilités dues aux turbulences atmosphériques.

Par ailleurs, on comprendra que, au lieu d'être appliqué à une aile d'avion comme cela vient d'être décrit ci-dessus et illustré par les dessins, le déflecteur 8 pourrait être prévu dans l'intrados du bord de fuite de toute autre surface aérodynamique, comme par exemple le pylône profilé d'une nacelle de moteur. Il va de soi qu'un tel déflecteur, associé à un tel pylône, pourrait réduire les instabilités locales dues aux décollements avec ou sans onde de choc, aux alentours dudit pylône.

## Revendications

1. Surface aérodynamique (1) d'aéronef comportant :
- un extrados (2) et un intrados (3) reliés l'un à l'autre, à l'avant, par un bord d'attaque (4) et, à l'arrière, par un culot de bord de fuite (6), dont la section arrière extrême forme le bord de fuite (5) de ladite surface aérodynamique (1) ; et
- au moins un déflecteur (8) destiné à améliorer les performances aérodynamiques de ladite surface aérodynamique (1), la corde (*c*) dudit déflecteur (8) étant égale à quelques centièmes de la corde (C) de ladite surface aérodynamique (1) et ledit déflecteur (8) étant disposé à l'arrière de celle-ci,
**caractérisé en ce que** :
- ledit déflecteur (8) est mobile et est logé dans un évidement (7) pratiqué dans l'épaisseur de l'intrados (3) dudit culot de bord de fuite (6) et débouchant dans ledit bord de fuite (5), de sorte que le bord arrière (6A) dudit culot (6) est constitué par une partie d'épaisseur réduite dudit bord de fuite (5) ;
- ledit déflecteur mobile (8) est articulé, par sa partie avant, autour d'un axe (9) au moins sensiblement parallèle audit bord de fuite (5) pour pouvoir pivoter autour dudit axe d'articulation (9) sous l'action de moyens d'actionnement (10, 11) ; et
- ledit déflecteur (8) mobile peut prendre :
. soit une position extrême rétractée (8R), pour laquelle ledit déflecteur (8) est entièrement logé dans ledit évidement d'intrados (7) en assurant la continuité dudit intrados (3), le bord arrière (8A) dudit déflecteur (8) coopérant alors avec ledit bord arrière (6A) dudit culot (6) pour former ledit bord de fuite (5) ;
soit l'une quelconque d'une pluralité de positions déployées (8I), pour laquelle ledit déflecteur (8) est braqué avec sa partie arrière en saillie hors dudit évidement d'intrados (7), en communiquant ainsi au bord de fuite de ladite surface aérodynamique une épaisseur variable paramétrable.

2. Surface aérodynamique selon la revendication 1,
**caractérisée en ce que** la corde (*c*) dudit déflecteur (8) est au plus égale à trois centièmes de la corde (C) de ladite surface aérodynamique (1).

3. Surface aérodynamique selon l'une des revendications 1 ou 2,
**caractérisée en ce que**, en position extrême rétractée (8R) dudit déflecteur (8), le bord arrière (8A) de celui-ci est aligné avec le bord arrière (6A) dudit culot de bord de fuite (6).

4. Surface aérodynamique selon l'une des revendications 1 ou 2,
**caractérisée en ce que**, en position rétractée (8R) dudit déflecteur, le bord arrière (8A) de celui-ci fait saillie (8P) par rapport au bord arrière (6A) dudit culot de bord de fuite (6).

5. Surface aérodynamique selon l'une quelconque des revendications 1 à 4,
**caractérisée en ce que** ledit évidement d'intrados (7) et ledit déflecteur (8) s'étendent sur la plus grande partie de la longueur dudit bord de fuite (5).

6. Surface aérodynamique selon l'une quelconque des revendications 1 à 4,
**caractérisée en ce que** ledit évidement (7) et ledit déflecteur (8) s'étendent sur une portion limitée (ℓ) de la longueur dudit bord de fuite (5).

7. Surface aérodynamique selon la revendication 6,
**caractérisée en ce qu'**elle comporte plusieurs déflecteurs (8) de longueur limitée (ℓ), disposés le long dudit bord de fuite (5).

8. Surface aérodynamique selon l'une quelconque des revendications 1 à 7,
**caractérisée en ce que** lesdits moyens d'actionnement (10, 11) communiquent audit déflecteur mobile un braquage angulaire fixe.

9. Surface aérodynamique selon l'une quelconque des revendications 1 à 7,
**caractérisée en ce que** lesdits moyens d'actionnement (10, 11) communiquent audit déflecteur mobile un braquage angulaire oscillatoire.

10. Surface aérodynamique selon la revendication 9,
**caractérisée en ce que** ledit braquage angulaire oscillatoire est fonction de la mesure de capteurs (16.1 à 16.n) répartis sur l'extrados (2) de ladite surface aérodynamique et permettant de localiser, à chaque instant, les niveaux de l'intensité de l'éventuel décollement de l'écoulement d'air sur ladite surface.

11. Surface aérodynamique selon la revendication 10,
**caractérisée en ce que** lesdits capteurs (16.1 à 16.n) mesurent des pressions.

## Claims

1. An aircraft aerodynamic surface (1) comprising:
- a reduced-pressure face (2) and a pressure face (3) which are connected together, at the front, by a leading edge (4) and, at the rear, by a trailing edge base (6), the extreme rear section of which forms the trailing edge (5) of said aerodynamic surface (1); and
- at least one deflector (8) intended to improve the aerodynamic performance of said aerodynamic surface (1), the chord (c) of said deflector (8) being equal to a few hundredths of the chord (C) of said aerodynamic surface (1) and said deflector (8) being arranged to the rear thereof,
**characterized in that**:
- said deflector (8) can move and is housed in a recess (7) made in the thickness of the pressure face (3) of said trailing edge base (6) and opening into said trailing edge (5) so that the rear edge (6A) of said base (6) consists of a reduced-thickness part of said trailing edge (5) ;
- said moving deflector (8) is articulated, via its front part, about an axis (9) at least essentially parallel to said trailing edge (5) so as to be able to pivot about said axis of articulation (9) under the action of actuating means (10, 11); and
- said moving deflector (8) can adopt:
• either a retracted extreme position (8R), for which said deflector (8) is fully housed in said pressure face recess (7) ensuring the continuity of said pressure face (3), the rear edge (8A) of said deflector (8) then collaborating with said rear edge (6A) of said base (6) to form said trailing edge (5);
• or any one of a number of deployed positions (8I), for which said deflector (8) is turned with its rear part projecting from said pressure face recess (7), thus giving the trailing edge of said aerodynamic surface a parameterizable variable thickness.

2. The aerodynamic surface as claimed in claim 1,
**characterized in that** the chord (c) of said deflector (8) is at most equal to three hundredths of the chord (C) of said aerodynamic surface (1).

3. The aerodynamic surface as claimed in one of claims 1 and 2,
**characterized in that**, when said deflector (8) is in the retracted extreme position (8R), the rear edge (8A) thereof is aligned with the rear edge (6A) of said trailing edge base (6).

4. The aerodynamic surface as claimed in one of claims 1 and 2,
**characterized in that** when said deflector is in the retracted position (8R), the rear edge (8A) thereof projects (8P) with respect to the rear edge (6A) of said trailing edge base (6).

5. The aerodynamic surface as claimed in one of claims 1 to 4,
**characterized in that** said pressure face recess (7) and said deflector (8) extend over most of the length of said trailing edge (5).

6. The aerodynamic surface as claimed in one of claims 1 to 4,
**characterized in that** said recess (7) and said deflector (8) extend over a limited portion (ℓ) of the length of said trailing edge (5).

7. The aerodynamic surface as claimed in claim 6,
**characterized in that** it comprises several deflectors (8) of limited length (ℓ), arranged along said trailing edge (5).

8. The aerodynamic surface as claimed in any of claims 1 to 7,
**characterized in that** said actuating means (10, 11) impart a fixed angular turning to said moving deflector.

9. The aerodynamic surface as claimed in any of claims 1 to 7,
**characterized in that** said actuating means (10, 11) impart a fluctuating angular turning to said moving deflector.

10. The aerodynamic surface as claimed in claim 9,
**characterized in that** said fluctuating angular turning is dependent on the measurement from sensors (16.1 to 16.n) spread along the reduced-pressure face (2) of said aerodynamic surface and making it possible, at every instant, to locate the levels of intensity of any air flow separation over said surface.

11. The aerodynamic surface as claimed in claim 10,
**characterized in that** said sensors (16.1 to 16.n) measure pressures.

## Patentansprüche

1. Aerodynamische Fläche (1) eines Luftfahrzeugs umfassend:
- eine Oberseite (2) und eine Unterseite (3), die vorn durch eine Vorderkante (4) und hinten durch einen Ansatz der Hinterkante (6), dessen hinterster Abschnitt die Hinterkante (5) der aerodynamischen Fläche (1) bildet, miteinander verbunden sind, und
- mindestens einen Ablenker (8), der dafür bestimmt ist, die aerodynamischen Leistungsdaten der aerodynamischen Fläche (1) zu verbessern, wobei die Profilsehne (c) des Ablenkers (8) gleich einigen Hundertstel der Profilsehne (C) der aerodynamischen Fläche (1) ist und der Ablenker (8) an deren hinterem Teil angebracht ist, **dadurch gekennzeichnet, dass**:
- der Ablenker (8) beweglich ist und in einer Aussparung (7) untergebracht ist, die in der Dicke der Unterseite (3) des Ansatzes der Hinterkante (6) ausgebildet ist und in der Hinterkante (5) dergestalt ausgebildet ist, dass die hintere Kante (6A) des Ansatzes (6) durch einen Teil mit verminderter Dicke der Hinterkante (5) gebildet wird;
- der bewegliche Ablenker (8) mit seinem vorderen Teil um eine Achse (9), die zumindest etwa parallel zur Hinterkante (5) verläuft, gelenkig angeordnet ist, damit er um die Drehachse (9) unter der Wirkung von Betätigungsmittel (10, 11) gedreht werden kann; und
- der bewegliche Ablenker (8)
* entweder eine eingefahrene Endstellung (8R) einnehmen kann, für welche der Ablenker (8) sich völlig in der Aussparung der Unterseite (7) befindet und dabei die Kontinuität der Unterseite (3) gewährleistet, wobei die hintere Kante (8A) des Ablenkers (8) dann mit der hinteren Kante (6A) des Ansatzes (6) zusammenwirkt, um die Hinterkante (5) zu bilden;
* oder eine beliebige von einer Anzahl von ausgefahrenen Stellungen (8I) einnehmen kann, für welche der Ablenker (8) mit seinem hinteren Teil über die Aussparung der Unterseite (7) hinaus ausgeschwenkt ist, wobei er dadurch der Hinterkante der aerodynamischen Fläche eine veränderliche parametrierbare Dicke verleiht.

2. Aerodynamische Fläche nach Anspruch 1,
**dadurch gekennzeichnet, dass** die Profilsehne (c) des Ablenkers (8) höchstens gleich drei Hundertstel der Profilsehne (C) der aerodynamischen Fläche (1) beträgt.

3. Aerodynamische Fläche nach einem der Ansprüche 1 oder 2,
**dadurch gekennzeichnet, dass** in der eingefahrenen Endstellung (8R) des Ablenkers (8) die Hinterkante (8A) desselben mit der Hinterkante (6A) des Ansatzes der Hinterkante (6) fluchtet.

4. Aerodynamische Fläche nach einem der Ansprüche 1 oder 2,
**dadurch gekennzeichnet, dass** in der eingefahrenen Endstellung (8R) des Ablenkers (8) die Hinterkante (8A) desselben über die Hinterkante (6A) des Ansatzes der Hinterkante (6) hinaus ragt.

5. Aerodynamische Fläche nach einem beliebigen der Ansprüche 1 bis 4, **dadurch gekennzeichnet, dass** die Aussparung der Unterseite (7) und der Ablenker (8) sich über den größten Teil der Länge der Hinterkante (5) erstrecken.

6. Aerodynamische Fläche nach einem beliebigen der Ansprüche 1 bis 4, **dadurch gekennzeichnet, dass** die Aussparung (7) und der Ablenker (8) sich über einen begrenzten Bereich (ℓ) der Länge der Hinterkante (5) erstrecken.

7. Aerodynamische Fläche nach Anspruch 6,
**dadurch gekennzeichnet, dass** sie mehrere Ablenker (8) begrenzter Länge (ℓ) aufweist, die längs der Hinterkante (5) angeordnet sind.

8. Aerodynamische Fläche nach einem beliebigen der Ansprüche 1 bis 7, **dadurch gekennzeichnet, dass** die Betätigungsmittel (10, 11) dem beweglichen Ablenker einen festen Winkelausschlag verleihen.

9. Aerodynamische Fläche nach einem beliebigen der Ansprüche 1 bis 7, **dadurch gekennzeichnet, dass** die Betätigungsmittel (10, 11) dem beweglichen Ablenker einen oszillierenden Winkelausschlag verleihen.

10. Aerodynamische Fläche nach Anspruch 9, **dadurch gekennzeichnet, dass** der oszillierende Winkelausschlag eine Funktion der Messwerte von Aufnehmern (16.1 bis 16.n) ist, die auf der Oberseite (2) der aerodynamischen Fläche verteilt angeordnet sind und die es ermöglichen, zu jedem Zeitpunkt die Niveaus der Intensität der möglichen Ablösungserscheinung der Luftströmung auf der Fläche zu lokalisieren.

11. Aerodynamische Fläche nach Anspruch 10,
**dadurch gekennzeichnet, dass** die Aufnehmer (16.1 bis 16.n) Drücke messen.
